# EUROPÄISCHE PATENTANMELDUNG

(11) **EP 2 905 946 A1**
(43) Veröffentlichungstag der Anmeldung: **12.08.2015**
(21) Anmeldenummer: 15151988.1
(22) Anmeldetag: 21.01.2015
(51) Int. Cl.: H04L 29/08, G06F 9/445

(54) **Sensor mit Anwendungsprogramm**

(30) Priorität: 07.02.2014 DE 102014101575
(71) Anmelder: SICK AG, 79183 Waldkirch (DE)
(72) Erfinder: Lingg, Oliver, 79108 Freiburg (DE); Püski, Matthias, 79194 Gundelfingen (DE); Zeiher, Mathis, 79106 Freiburg (DE)
(74) Vertreter: Rieger, Daniel-Stephan

(57) **Zusammenfassung**

Sensor mit einer Steuer- und Auswerteeinheit (2) und einer Speichereinheit (4), wobei ein Anwendungsprogramm (6) zur Parametrierung und/oder Diagnose für den Sensor (1) vorgesehen ist, wobei auf der Speichereinheit (4) eine HTML-Beschreibung (8) gespeichert ist, wobei die HTML-Beschreibung (8) einen Urlademechanismus (10) enthält, wobei der Urlademechanismus (10) dazu ausgebildet ist, das Anwendungsprogramm (6) in einen Browser (12) auf einem Endgerät (14) zu übertragen und das Anwendungsprogramm (6) in dem Browser (12) startbar ist.

## Beschreibung

Die vorliegende Erfindung betrifft einen Sensor mit einer Steuer- und Auswerteeinheit und einer Speichereinheit, wobei ein Anwendungsprogramm zur Parametrierung und/oder Diagnose für den Sensor vorgesehen ist.

Sensoren verfügen häufig über eine Vielzahl von Parametern und sind dadurch schwierig zu konfigurieren. Dem Anwender wird diese Konfiguration durch Werkzeuge bzw. Engineering Tools, beispielsweise dem Tool bzw. Werkzeug SOPAS ET der Anmelderin erleichtert, indem es eine intuitive Oberfläche zur Sensorkonfiguration und Überwachung bietet. Derartige Engineering Tools sind allerdings nicht in Browsern lauffähig und müssen auf dem jeweiligen Rechner bzw. Personal Computer installiert werden. Häufig sind hierzu auf dem Rechner bzw. Personal Computer Administratorrechte erforderlich, was den Installationsprozess erschwert oder ggf. unmöglich macht.

Zeitgemäße Anwendungsprogramme werden immer häufiger als Web-Anwendungsprogramme angeboten, d. h. die Anwendung muss nicht mehr auf dem Personal Computer installiert werden, sondern läuft vollständig in einem Browser, wie beispielsweise Google Chrome, Mozilla Firefox, Microsoft Internet Explorer oder mobilen Browsern. Dadurch brauchen die Anwendungsprogramme nur einmal entwickelt werden und sind völlig plattformunabhängig. Die Anwendungsprogramme können sowohl auf Desktop-Systemen wie beispielsweise Personal Computern, als auch auf mobilen Geräten wie Tablets und Smartphones ausgeführt werden.

Sensoren nach dem Stand der Technik verfügen häufig über einen integrierten Webserver und liefern HTML-Seiten aus, d. h. die Seitengenerierung erfolgt durch den Sensor selbst. Somit ist ein Web-Anwendungsprogramm nach dem Stand der Technik fest in den Sensoren integriert und nicht einfach austauschbar. Die HTML-Seiten werden über eine HTTP-Schnittstelle an einen Browser ausgeliefert, ggf. erfolgt auch ein Datenaustausch via XML.

Kleine Sensoren verfügen häufig nicht über die notwendigen Ressourcen, beispielsweise aufgrund zu leistungsschwacher Mikrocontroller, um komplexe Anwendungen bereitstellen zu können. Verschiedene Geräte bzw. Sensoren nach dem Stand der Technik weisen lediglich eine sehr eingeschränkte Benutzeroberfläche auf. Die Anforderungen an die Recheneinheiten, beispielsweise an einen Mikroprozessor oder Mikrokontroller ist durch eine Generierung von Seiten auf dem Gerät sehr hoch und kann die Sensorfunktion bzw. die Sensoranwendung stören oder beeinträchtigen. Eine Anpassbarkeit des Sensors ist nur durch eine Firmware-Anpassung oder eine Parametrierung möglich. Firmware-Änderungen sind ggf. kritisch, da Fehler bei der Firmware-Änderung zu einem Erliegen des Sensorbetriebs führen können.

Gemäß der DE 10 2006 057 708 A1 werden zur Bereitstellung einer Benutzeroberfläche Daten einer Gerätebeschreibungsdatei in dem Sensor in einer durch eine Standardsoftware anzeigbaren Form hinterlegt, beispielsweise in HTML zur Anzeige in einem Standardbrowser.

Eine Aufgabe der Erfindung besteht darin, zur Sensorkonfiguration und zur Inbetriebnahme eines Sensors die Vorteile eines mobilen Gerätes mit einem Web-Anwendungsprogramm nutzen zu können. So soll ein Anwender, beispielsweise eine Inbetriebnahmeperson beispielsweise einen mobilen Rechner, beispielsweise ein Tablet-PC zur Konfiguration des Sensors benutzen können. Hierzu soll beispielsweise eine Datenübertragung über eine Funkverbindung oder ein Netzwerk erfolgen.

Eine weitere wichtige Anforderung ist eine Einbindung in Fremdsysteme, wie beispielsweise Mensch-Maschinen-Inferfaces (HMIs) oder SCADA-Systeme (Supervisory Control and Data Acquisition System).

Die Aufgabe wird gemäß Anspruch 1 gelöst durch einen Sensor mit einer Steuer- und Auswerteeinheit und einer Speichereinheit, wobei ein Anwendungsprogramm zur Parametrierung und/oder Diagnose für den Sensor vorgesehen ist, wobei auf der Speichereinheit eine HTML-Beschreibung gespeichert ist, wobei die HTML-Beschreibung einen Urlademechanismus enthält, wobei der Urlademechanismus dazu ausgebildet ist, das Anwendungsprogramm in einen Browser auf einem Endgerät zu übertragen und das Anwendungsprogramm in dem Browser startbar ist.

Erfindungsgemäß wird das Anwendungsprogramm vom Sensor auf einen Client, in diesem Fall den Browser, auf dem Endgerät verlagert. Dies führt zu dem Vorteil, dass die Seitengenerierung auf dem Client bzw. dem Endgerät und nicht mehr auf dem Sensor stattfindet. Anstatt einzelne HTML-Seiten anzuzeigen, wird auf dem Endgerät, nämlich dem Browser, ein vollwertiges in sich geschlossenes Anwendungsprogramm ausgeführt, das leicht austauschbar ist. Der Sensor selbst weist daher keinen Webserver auf.

Da der Sensor nicht mehr mit der Generierung des Anwendungsprogramms, d. h. der Generierung von HTML-Seiten belastet wird, kann der Sensor preiswerter hergestellt werden, da die Auswerte- und Steuereinheit nicht mehr mit der Generierung von HTML-Seiten beschäftigt ist. Da die Ausführung des Anwendungsprogramms durch die Generierung der HTML-Seiten auf dem Endgerät erfolgt, welches meist ohnehin als leistungsfähiges Endgerät, beispielsweise als Personal Computer vorhanden ist, kann die Generierung der HTML-Seiten schneller durchgeführt werden, als wenn dies auf dem Sensor geschehen würde.

Da der Sensor durch das Anwendungsprogramm mittels HTML-Seiten parametriert bzw. diagnostiziert wird, ist das Anwendungsprogramm plattformunabhängig. Das Anwendungsprogramm braucht nicht an verschiedene Betriebssysteme angepasst werden.

Gemäß der Erfindung ist das Anwendungsprogramm auch einfach anpassbar. Nach einer Anpassung des Anwendungsprogrammes muss dieses nur noch ausgetauscht werden.

Die Firmware selbst, welche primär die Funktionen des Sensors selbst bereitstellt, muss bei einer Anpassung des Anwendungsprogramms nicht mehr angepasst oder verändert werden. D. h. die Firmware und das Anwendungsprogramm sind unabhängig voneinander austauschbar.

Für das browserbasierte Anwendungsprogramm stehen sehr gute Entwicklungswerkzeuge, wie beispielsweise Java-Script oder Type-Script zur Verfügung.

Der Urlademechanismus ist dazu ausgebildet, das Anwendungsprogramm einzulesen und zu interpretieren. Beispielsweise enthält die Beschreibungsdatei Oberflächenelemente und weitere Grundeinstellungen für eine Benutzeroberfläche. Der Urlademechanismus ist eine statische HTML-Seite. D. h. der Urlademechanismus wird beispielsweise nicht von einem Automaten während einer Programmlaufzeit generiert. Dadurch, dass der Urlademechanismus eine statische HTML-Seite ist, ist der Urlademechanismus dazu ausgebildet, ein im Urlademechanismus statisch fest verknüpftes Anwendungsprogramm zu laden. Der Urlademechanismus befindet sich beispielsweise in der Anwendungsschicht, beispielsweise in einer Ebene 7 bzw. Schicht 7 im OSI-Schichten-Model.

Die HTML-Beschreibung, die den Urlademechanismus enthält, wird dabei durch eine Aktion, entweder eine Anwenderaktion oder eine automatische Aktion, in den Browser im Endgerät übertragen. Eine Anwenderaktion ist beispielsweise ein einfacher Mausklick, um eine Parametrierung und/oder eine Diagnose des Sensors einzuleiten. Eine automatische Aktion ist beispielsweise eine von einem Automaten eingeleitete Parametrierung und/oder Diagnose.

Der Urlademechanismus überträgt dann vom Browser aus auf dem Endgerät das Anwendungsprogramm auf das Endgerät. Danach wird das Anwendungsprogramm vom Urlademechanismus in dem Browser gestartet.

Der Urlademechanismus wird dabei gemäß der Erfindung immer vom Sensor bereitgestellt, wodurch automatisch immer der richtige Urlademechanismus für den betreffenden Sensor vorliegt.

Das Anwendungsprogramm ist dazu ausgebildet, nach dem Start eine Beschreibung einer Benutzeroberfläche einzulesen und dynamisch die Benutzeroberfläche aufzubauen.

In einer bevorzugten Ausführungsform ist auf der Speichereinheit das Anwendungsprogramm gespeichert. Dies hat den Vorteil, dass alle zur Konfiguration bzw. Diagnose notwendigen Softwarekomponenten auf dem Sensor selbst zur Verfügung stehen. Lediglich der Browser muss auf einem Endgerät zur Verfügung stehen.

In einer alternativen Ausführungsform ist das Anwendungsprogramm auf einem externen Rechner gespeichert. Dadurch braucht das Anwendungsprogramm nicht auf dem Sensor selbst zur Verfügung gestellt werden. Beispielsweise wird das Anwendungsprogramm von dem Sensor über eine Internetverbindung von dem externen Rechner geladen und dann auf das Endgerät übertragen und in dem Browser gestartet.

In Weiterbildung der Erfindung liegt das Anwendungsprogramm in einem komprimierten Containerformat, beispielsweise ZIP oder RAR vor, wobei der Urlademechanismus das komprimierte Containerformat des Anwendungsprogramms dekomprimiert bzw. extrahiert. Dadurch, dass das Anwendungsprogramm in einem komprimierten Containerformat vorliegt, benötigt das Anwendungsprogramm weniger Speicherplatz, so dass beispielsweise auf der Speichereinheit des Sensors selbst umfangreichere Anwendungsprogramme abgelegt werden können. Auch eine Ablage der Anwendungsprogramme auf einem externen Rechner ist durch das komprimierte Containerformat von Vorteil, da beispielsweise sehr viele verschiedene Anwendungsprogramme für sehr viele verschiedene Sensoren so platzsparend auf dem Rechner abgelegt werden können. Dadurch ist eine einfache Anpassbarkeit gewährleistet. Es muss lediglich das Container-Anwendungsprogramm ausgetauscht werden.

In Weiterbildung der Erfindung ist die Beschreibung der Benutzeroberfläche in mindestens einer Datei beschrieben. Beispielsweise handelt es sich dabei um eine XML-Datei. XML steht für Extensible Markup Language bzw. erweiterbare Auszeichnungssprache. XML ist eine Auszeichnungssprache zur Darstellung hierarchisch strukturierter Daten in Form von Textdateien. XML-Dateien haben den Vorteil, dass diese einen plattformunabhängigen und implementationsunabhängigen Austausch von Daten ermöglichen. XML-Dateien ermöglichen somit eine einfache, kompatible und allgemeingültige Beschreibung der Benutzeroberfläche.

Die Beschreibung der Benutzeroberfläche kann jedoch auch in einer JSON-Datei gespeichert sein. JSON steht für Java Script Object Notation und ist ein kompaktes Datenformat oder Datenaustauschformat, welches in einfacher Textform vorliegt zum Zweck des Datenaustauschs zwischen Anwendungen. JSON ist eine deskriptive Beschreibungssprache. JSON ist unabhängig von einer verwendeten Programmiersprache.

Gemäß einer bevorzugten Ausführungsform ist die Benutzeroberfläche eine Einzelseiten-Webanwendung. Die Einzelseiten-Webanwendung wird auch 'Single-Page-App' genannt und bildet ein modernes Anwendungskonzept. Als Einzelseiten-Webanwendung wird eine Website bezeichnet, die aus einem einzigen HTML-Dokument besteht und deren Inhalte dynamisch nachgeladen werden. Diese Art von Website-Design steht im Gegensatz zu klassischen Websites, die aus mehreren, untereinander verlinkten HTML-Dokumenten bestehen. Durch die Einzelseiten-Webanwendung ist ein Betrieb des Anwendungsprogramms in nahezu allen Browsern möglich. So kann das Anwendungsprogramm beispielsweise auch auf mobilen Geräten wie Smartphones oder Tablet-PCs ausgeführt werden.

In Weiterbildung der Erfindung ist das Endgerät ein PC, ein Tablet-PC, ein Laptop, ein Notebook, ein Netbook, ein Mobiltelefon, eine Eingabe/Ausgabeeinheit einer Maschine oder ein Smartphone. Dadurch kann der Sensor durch die genannten verschiedenen Endgeräte parametriert oder diagnostiziert werden. Dadurch kann der Sensor mit dem Endgerät parametriert oder diagnostiziert werden, welches gerade zur Verfügung steht. Beispielsweise kann ein Smartphone benutzt werden, da ein Smartphone handlich ist und meistens ohnehin bei einem Anwender vorhanden ist. Dadurch ist für den Anwender eine flexible Parametrierung und/oder Diagnose des Sensors möglich.

In Weiterbildung der Erfindung ist die Benutzeroberfläche an das Endgerät angepasst. Dadurch ist eine optimale Darstellung auf dem jeweiligen Endgerät gewährleistet. Dabei ist eine Grafikdarstellung und/oder eine Textdarstellung an das Endgerät angepasst.

In Weiterbildung verfügt der Sensor über eine Rest-Schnittstelle (Representational State Transfer), um eine Verbindung zwischen Sensor und Endgerät herzustellen. Gemäß der REST-Schnittstelle ist es vorgesehen, dass ein einheitlicher Quellenanzeiger, auch URL (Uniform Ressource Locator) genannt, genau ein Ergebnis einer Aktion darstellt.

Die REST-Schnittstelle setzt auf ein zustandsloses Client-Server-Protokoll, wobei im Normalfall HTTP oder HTTPS eingesetzt wird. Jede REST-Nachricht enthält dabei alle Informationen, die für das Endgerät notwendig sind, um die Nachricht zu verstehen. Weder der Sensor noch die Anwendung soll Zustandsinformationen zwischen zwei Nachrichten speichern. Eine derartig strikte Trennung der Zuständigkeiten zwischen Client und Server führt dazu, dass ein REST-konformer Webservice als zustandslos bezeichnet werden kann. Jede Anfrage des Anwendungsprogramms an den Sensor ist in dem Sinne in sich geschlossen, als dass sie sämtliche Informationen über den Anwendungszustand beinhaltet, die vom Sensor für die Verarbeitung der Anfrage benötigt werden.

Zustandslosigkeit in der hier beschriebenen Form wirkt sich begünstigend auf die Skalierbarkeit eines Webservices aus. Da jede Anfrage in sich geschlossen ist und Anwendungsinformationen somit ausschließlich auf der Seite des Anwendungsprogramms vorgehalten werden, ist auf der Seite des Sensors keine Sitzungsverwaltung erforderlich. Im Gegensatz hierzu nutzen nach dem Stand der Technik jedoch viele HTTP-basierte Anwendungen Cookies und andere Techniken, um Zustandsinformationen zu behalten.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen Sensor und ein Endgerät mit dem Anwendungsprogramm.
- Figur 2: einen Sensor und ein Endgerät mit einer Funkübertragung

In den nachfolgenden Figuren sind identische Teile mit identischen Bezugszeichen versehen.

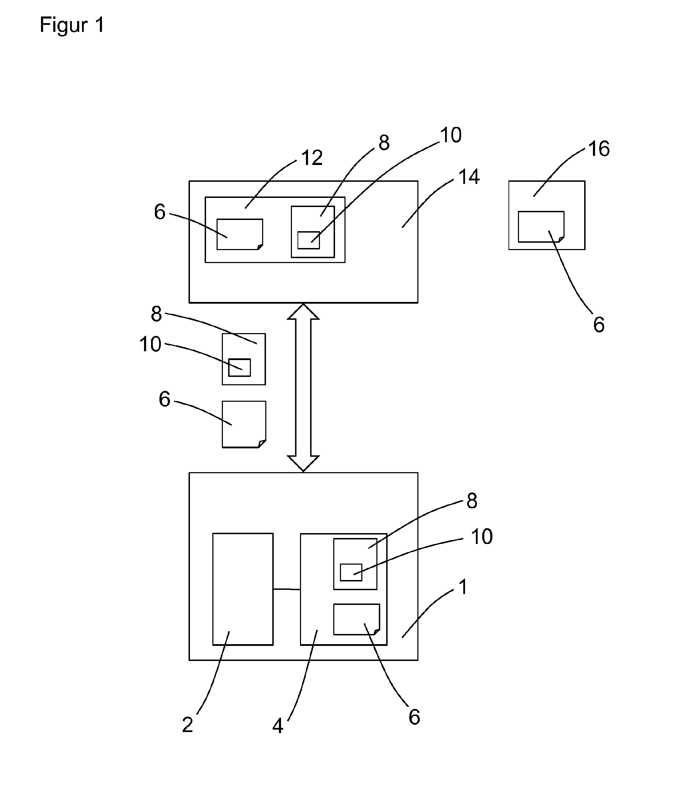

Figur 1 zeigt einen Sensor 1 mit einer Steuer- und Auswerteeinheit 2 und einer Speichereinheit 4, wobei ein Anwendungsprogramm 6 zur Parametrierung und/oder Diagnose für den Sensor 1 vorgesehen ist, wobei auf der Speichereinheit 4 eine HTML-Beschreibung 8 gespeichert ist, wobei die HTML-Beschreibung 8 einen Urlademechanismus 10 enthält, wobei der Urlademechanismus 10 dazu ausgebildet ist, das Anwendungsprogramm 6 in einen Browser 12 auf ein Endgerät 14 zu übertragen und das Anwendungsprogramm 6 in dem Browser 12 startbar ist.

Beispielsweise ist auf der Speichereinheit 4 das Anwendungsprogramm 6 gespeichert. Es kann jedoch auch vorgesehen sein, dass das Anwendungsprogramm 6 auf einem externen Rechner 16 gespeichert ist. Dabei ist es vorgesehen, dass das Anwendungsprogramm 6 über eine Internetverbindung auf das Endgerät 14 übertragen wird.

Das Anwendungsprogramm 6 liegt beispielsweise in einem komprimierten Containerformat, beispielsweise ZIP oder RAR vor, wobei der Urlademechanismus 10 dazu ausgebildet ist, das komprimierte Containerformat des Anwendungsprogramms 6 zu dekomprimieren bzw. zu extrahieren.

Es wird ein vollständiges Anwendungsprogramm 6, beispielsweise mit Type-Script bzw. Java-Script erstellt. Dieses Anwendungsprogramm 6 ist durch eine Beschreibungssprache leicht anpassbar. Der Sensor 1 verfügt über eine http-Schnittstelle. Über diese http-Schnittstelle können das Anwendungsprogramm 6 und der Sensor mittels Java Script Objekt Notation (JSON) Objektdaten austauschen. JSON ist ein kompaktes Datenformat in für Mensch und Maschine einfach lesbarer Textform zum Zweck des Datenaustauschs zwischen Anwendungen, in diesem Fall zwischen dem Sensor 1 und dem Anwendungsprogramm 6 im Browser 12.

Die Dateien des Anwendungsprogramms 6 sind selbst nicht lauffähig bzw. können sich nicht selbst starten. Um die Dateien starten zu können, ist ein Urlademechanismus 10, auch bekannt unter dem Begriff "Bootstrap", vorgesehen. Der Urlademechanismus 10 ist dazu ausgebildet, mindestens eine Beschreibungsdatei des Anwendungsprogramms 6 einzulesen und zu interpretieren. Dieser Urlademechanismus 10 ist in einer gewöhnlichen HTML-Datei enthalten, die über einen Browser 12 gestartet werden kann und beispielsweise auf dem Sensor 1 abgelegt ist. Diese HTML-Datei lädt das Anwendungsprogramm 6 von einer internen Quelle, nämlich der Speichereinheit 4 oder einer externen Quelle, nämlich dem externen Rechner 16 und startet diese auf dem Endgerät 14 in dem Browser 12.

Der Urlademechanismus 10 ist eine statische HTML-Seite. Die HTML-Beschreibung 8, die den Urlademechanismus 10 enthält, wird dabei durch eine Aktion, entweder eine Anwenderaktion oder eine automatische Aktion in den Browser 12 im Endgerät 14 übertragen. Eine Anwenderaktion ist beispielsweise ein einfacher Mausklick, um eine Parametrierung und/oder eine Diagnose des Sensors einzuleiten. Eine automatische Aktion ist beispielsweise eine von einem Automaten eingeleitete Parametrierung und/oder Diagnose.

Der Urlademechanismus 10 überträgt dann vom Browser 12 aus auf dem Endgerät 14 das Anwendungsprogramm 6 auf das Endgerät 14. Danach wird das Anwendungsprogramm 6 vom Urlademechanismus 10 in dem Browser 12 gestartet.

Das Anwendungsprogramm 6 ist dazu ausgebildet, nach dem Start eine Beschreibung einer Benutzeroberfläche einzulesen und dynamisch die Benutzeroberfläche aufzubauen. Die Beschreibung der Benutzeroberfläche ist mindestens in einer Datei beschrieben. Dabei kann es sich beispielsweise um eine XML-Datei handeln. Gemäß dem Beispiel ist die Benutzeroberfläche eine Einzelseiten-Webanwendung.

Das Endgerät 14 ist beispielsweise ein PC, ein Tablet-PC, ein Laptop, ein Notebook, ein Netbook, ein Mobiltelefon, eine Eingabe/Ausgabeeinheit einer Maschine oder ein Smartphone. Die Benutzeroberfläche ist an das Endgerät 14 jeweils angepasst. So ist der Aufbau der Seiten bezüglich Grafiken und Texten an das jeweils verwendete Display des Endgerätes angepasst. Beispielsweise ist die Schriftgröße an das jeweilige Display angepasst.

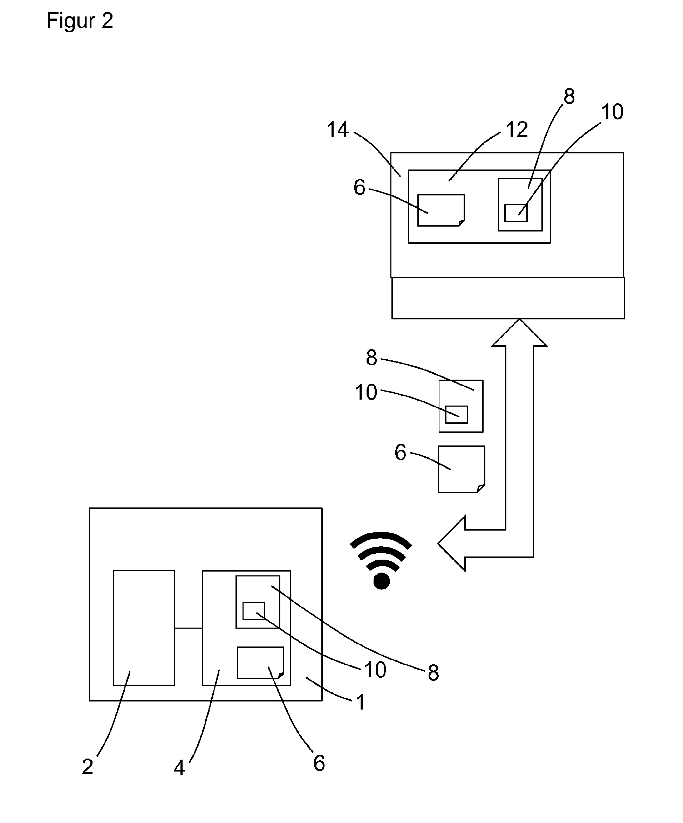

Gemäß Figur 2 ist zwischen Sensor 1 und Endgerät 14 eine drahtlose Verbindung, beispielsweise eine Funkverbindung, beispielsweise eine Bluetooth- oder WirelessLAN(WLAN)-Verbindung vorgesehen. Hierzu ist ein zusätzliches Kommunikationsprogramm erforderlich, das auf dem jeweiligen Endgerät 14 installiert ist. Dieses ist in der Lage, das Anwendungsprogramm 6 in dem Browser 12 auf dem Endgerät 14 zu starten.

### Bezugszeichen:

- 1: Sensor
- 2: Steuer- und Auswerteeinheit
- 4: Speichereinheit
- 6: Anwendungsprogramm
- 8: HTML-Beschreibung
- 10: Urlademechanismus
- 12: Browser
- 14: Endgerät
- 16: externer Rechner

## Patentansprüche

1. Sensor mit einer Steuer- und Auswerteeinheit (2) und einer Speichereinheit (4), wobei ein Anwendungsprogramm (6) zur Parametrierung und/oder Diagnose für den Sensor (1) vorgesehen ist,
**dadurch gekennzeichnet, dass**
auf der Speichereinheit (4) eine HTML-Beschreibung (8) gespeichert ist, wobei die HTML-Beschreibung (8) einen Urlademechanismus (10) enthält, wobei der Urlademechanismus (10) dazu ausgebildet ist, das Anwendungsprogramm (6) in einen Browser (12) auf einem Endgerät (14) zu übertragen und das Anwendungsprogramm (6) in dem Browser (12) startbar ist.

2. Sensor nach Anspruch 1, **dadurch gekennzeichnet, dass** auf der Speichereinheit (4) das Anwendungsprogramm (6) gespeichert ist.

3. Sensor nach Anspruch 1, **dadurch gekennzeichnet, dass** auf einem externen Rechner (16) das Anwendungsprogramm (6) gespeichert ist.

4. Sensor nach einem der vorhergehenden Ansprüche, **dadurch gekennzeichnet, dass** das Anwendungsprogramm (6) in einem komprimierten Containerformat, beispielsweise ZIP oder RAR vorliegt, wobei der Urlademechanismus (10) dazu ausgebildet ist, das komprimierte Containerformat des Anwendungsprogramms (6) zu dekomprimieren bzw. zu extrahieren.

5. Sensor nach einem der vorhergehenden Ansprüche, **dadurch gekennzeichnet, dass** eine Beschreibung einer Benutzeroberfläche des Anwendungsprogramms (6) in mindestens einer Datei beschrieben ist.

6. Sensor nach einem der vorhergehenden Ansprüche, **dadurch gekennzeichnet, dass** die Benutzeroberfläche eine Einzelseiten-Webanwendung ist.

7. Sensor nach einem der vorhergehenden Ansprüche, **dadurch gekennzeichnet, dass** das Endgerät (14) ein PC, ein Tablet-PC, ein Laptop, ein Notebook, ein Netbook, ein Mobiltelefon, eine Eingabe/Ausgabeeinheit einer Maschine oder ein Smartphone ist.

8. Sensor nach einem der vorhergehenden Ansprüche, **dadurch gekennzeichnet, dass** die Benutzeroberfläche an das Endgerät (14) angepasst ist.
